# EUROPEAN PATENT APPLICATION

(11) **EP 4 822 725 A1**
(43) Date of publication of application: **14.10.2026**
(21) Application number: 24922083.1
(22) Date of filing: 01.10.2024
(51) Int. Cl.: H01G 4/30, H01C 7/02, H01C 7/04, H01C 7/10

(54) **MULTILAYER CERAMIC ELECTRONIC COMPONENT**

(30) Priority: 29.01.2024 JP 2024011161
(71) Applicant: Murata Manufacturing Co., Ltd., Nagaokakyo-shi, Kyoto 617-8555 (JP)
(72) Inventor: ZENZAI, Kota, Nagaokakyo-shi, Kyoto 617-8555 (JP); YASUDA, Tatsunori, Nagaokakyo-shi, Kyoto 617-8555 (JP)
(74) Representative: Stöckeler, Ferdinand
(86) International application number: PCT/JP2024/035088
(87) International publication number: WO 2025/163973

(57) **Abstract**

The present invention provides a multilayer ceramic electronic component capable of being reliably mounted on a mounting substrate, suppressing the upward wetting of molten solder, and suppressing the occurrence of squeal. In a multilayer ceramic electronic component 1, on a main surface or a side surface serving as a mounting surface to a mounting substrate, two spacers 4 connected to an external electrode 3 are each composed of two regions facing each other in the length direction L, namely an inner region 41 and an outer region 42, which is the portion of the spacer 4 other than the inner region 41. When a line V perpendicular to the mounting surface is drawn from a tip Pt of a base electrode layer 30 constituting the external electrode 3, the inner region 41 is positioned further inward in the length direction L than the line V perpendicular to the mounting surface. The inner region 41 and the outer region 42 have different Sn contents.

## Description

### TECHNICAL FIELD

The present invention relates to a multilayer ceramic electronic component such as a multilayer ceramic capacitor.

### BACKGROUND ART

Multilayer ceramic electronic components such as multilayer ceramic capacitors are widely used in various electronic devices such as mobile terminal devices including mobile phones and personal computers. Such multilayer ceramic capacitors each include a rectangular parallelepiped-shaped multilayer body in which dielectric layers and internal electrode layers are alternately laminated, and external electrodes provided at both opposing ends of the multilayer body.

Multilayer ceramic capacitors each include an inner layer portion in which dielectric layers and internal electrodes are laminated. Then, dielectric layers functioning as outer layer portions are provided at the top and bottom of the inner layer portion to form a substantially rectangular parallelepiped multilayer body, and external electrodes are provided on both end surfaces in the longitudinal direction of the multilayer body to form a capacitor main body.

Furthermore, in order to suppress the occurrence of so-called "acoustic noise", multilayer ceramic capacitors are known that each include a spacer (metal frame) that covers a portion of the external electrode on a side of the capacitor main body to be mounted on a mounting substrate (Patent Document 1).

### Citation List

### Patent Document

Patent Document 1: US Patent No. 9,799,453

### DISCLOSURE OF THE INVENTION

### Problems to be Solved by the Invention

However, when solder that has been heated and melted during mounting wets up along the surface of the spacer and wets up to a high dimension in the height direction of the multilayer ceramic capacitor, expansion and contraction vibrations of the inner layer portion are transmitted to the mounting substrate, which may make it difficult to suppress the occurrence of acoustic noise.

It is an object for the present invention to provide multilayer ceramic electronic components such as multilayer ceramic capacitors that are each able to reliably perform mounting on a mounting substrate, suppress the wet rise of molten solder, and suppress the occurrence of acoustic noise. Means for Solving the Problems

The present inventor has found that, by dividing two spacers provided on one of the main surfaces or one of the lateral surfaces of the multilayer body into two regions, namely an inner region located inward and an outer region located outward in the length direction, and forming the inner region and the outer region to have different Sn content ratios, it is possible to suppress the wet rise of molten solder, thereby completing the present invention.

An embodiment of the present invention provides a multilayer ceramic electronic component which includes: a multilayer body including an inner layer portion including a plurality of dielectric layers and a plurality of internal electrode layers that are laminated, the multilayer body including two main surfaces opposed to each other in a lamination direction, two end surfaces opposed to each other in a length direction intersecting the lamination direction, and two lateral surfaces opposed to each other in a width direction intersecting the lamination direction and the length direction; two external electrodes each provided on a corresponding one of the two end surfaces, each connected to the plurality of internal electrode layers, and each covering a corresponding one of the two end surfaces and a portion of each of the two main surfaces or each of the two lateral surfaces that continues from the corresponding one of the two end surfaces and functions as a mounting surface to a mounting substrate; and two spacers each connected to a corresponding one of the two external electrodes on the mounting surface. Each of the two external electrodes includes a base electrode layer and a plated layer. Each of the two spacers includes two regions including an inner region and an outer region other than the inner region, the inner region of one of the two spacers and the inner region of one other of the two spacers being opposed to each other in the length direction. When a line perpendicular to the mounting surface is drawn from a tip of the base electrode layer covering a portion of the mounting surface, the inner region is located closer to an inner side in the length direction than the line perpendicular to the mounting surface, and the inner region and the outer region have different Sn content ratios.

### Effects of the Invention

According to an embodiment of the present invention, it is possible to reliably mount on a mounting substrate, suppress solder wet rise of molten solder, and suppress the occurrence of acoustic noise.

### BRIEF DESCRIPTION OF THE DRAWINGS

FIG. 1 is a diagram showing an external appearance of a multilayer ceramic capacitor 1.
FIG. 2 is a cross-sectional view of the multilayer ceramic capacitor 1 taken along the line II-II shown in FIG. 1.
FIG. 3 is a cross-sectional view of the multilayer ceramic capacitor 1 taken along the line III-III shown in FIG. 1.
FIG. 4 is an enlarged cross-sectional view of a portion of a spacer 4 of the multilayer ceramic capacitor 1.
FIG. 5 is a flowchart showing a manufacturing method of the multilayer ceramic capacitor 1.
FIG. 6 is a diagram explaining a multilayer body manufacturing step S1, a base electrode layer formation step S2, and a plated layer formation step S3.
FIG. 7 is a cross-sectional view of the multilayer ceramic capacitor 1 with an insulating material provided.

### PREFERRED MODE FOR CARRYING OUT THE INVENTION

In the following, a multilayer ceramic capacitor 1 will be described as an embodiment of the multilayer ceramic electronic component of the present invention, but the present invention is not limited thereto. Also, the drawings may be schematically simplified to explain the contents of the invention, and the ratio of dimensions of the components or between components depicted may not match the ratio of their dimensions described in the specification. Also, components described in the specification may be omitted in the drawings, or the number of components may be reduced in the drawings.

### (Multilayer Ceramic Capacitor 1)

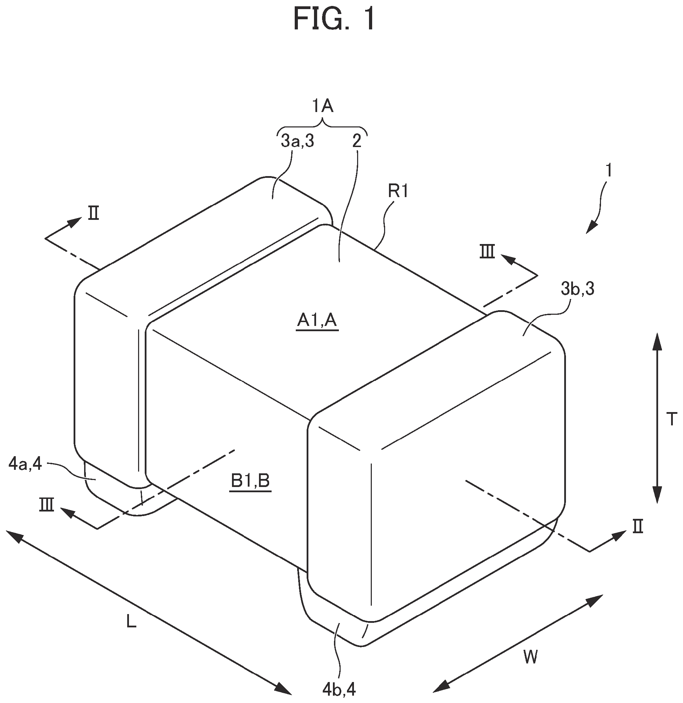

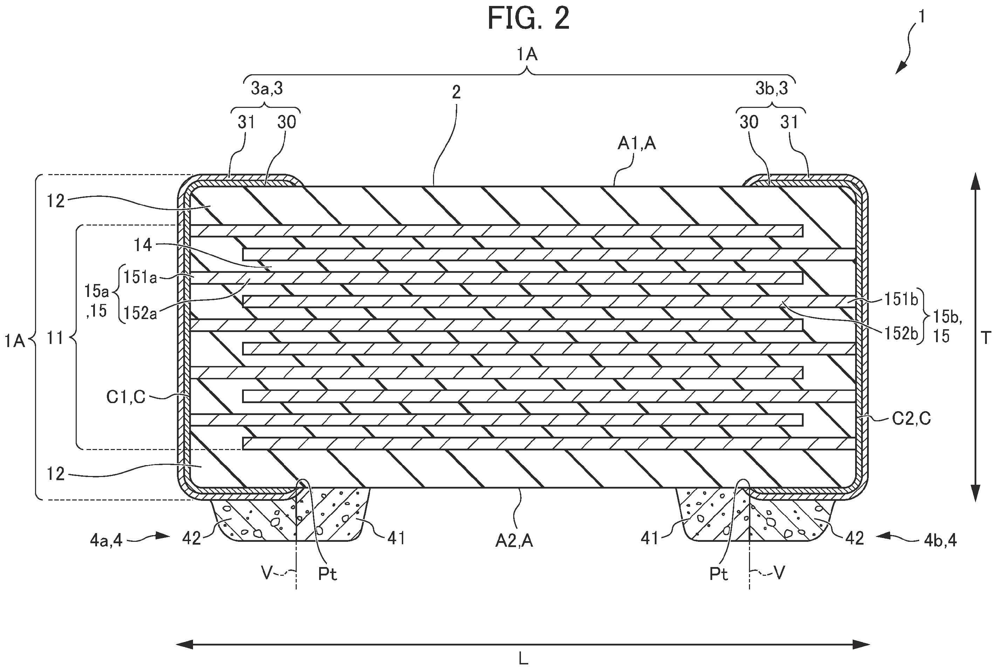

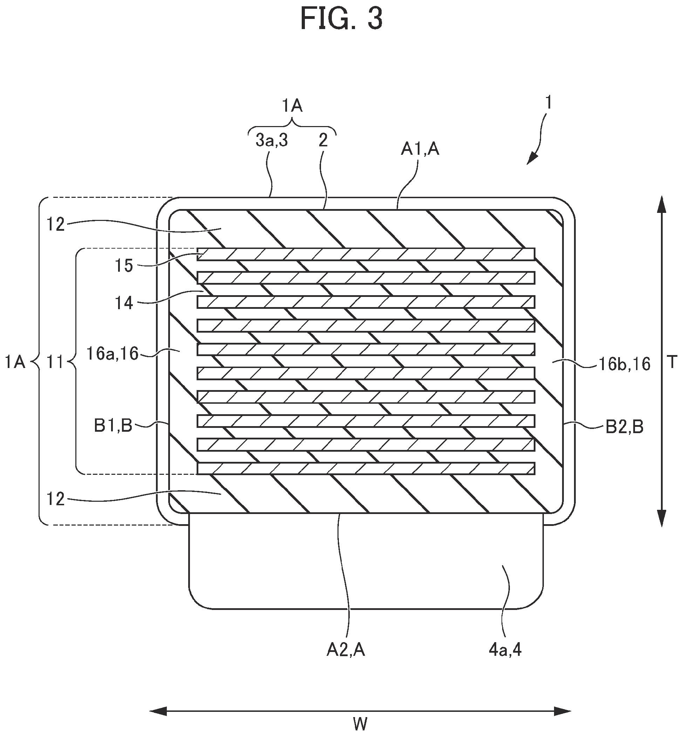

FIG. 1 is a schematic perspective view of a multilayer ceramic capacitor 1 of an embodiment. FIG. 2 is a cross-sectional view of the multilayer ceramic capacitor 1 of the embodiment taken along the line II-II in FIG. 1. FIG. 3 is a cross-sectional view of the multilayer ceramic capacitor 1 of the embodiment taken along the line III-III in FIG. 1. FIG. 2 is a cross section parallel to the length direction L and the lamination direction T, and is also referred to as an LT cross section. FIG. 3 is a cross section parallel to the width direction W and the lamination direction T, and is also referred to as a WT cross section.

The multilayer ceramic capacitor 1 has a substantially rectangular parallelepiped shape, and includes a capacitor main body 1A having a multilayer body 2 and a pair of external electrodes 3 provided at both ends of the multilayer body 2, and spacers 4 each attached to the capacitor main body 1A. The multilayer body 2 includes an inner layer portion 11 including dielectric layers 14 and internal electrode layers 15 laminated together.

In the following description, as terms representing the orientations of the multilayer ceramic capacitor 1, the direction in which the pair of external electrodes 3 are provided in the multilayer ceramic capacitor 1 is defined as the length direction L. The direction in which the dielectric layers 14 and the internal electrode layers 15 are laminated is defined as the lamination direction T. The direction intersecting both the length direction L and the lamination direction T is defined as the width direction W. In addition, in the embodiments, the width direction W is orthogonal to both of the length direction L and the lamination direction T.

### (Outer Surface of Multilayer Body 2)

Among the six outer surfaces of the multilayer body 2, a pair of outer surfaces opposed to each other in the lamination direction T is defined as a first main surface A1 and a second main surface A2, a pair of outer surfaces opposed to each other in the width direction W is defined as a first lateral surface B1 and a second lateral surface B2, and a pair of outer surfaces opposed to each other in the length direction L is defined as a first end surface C1 and a second end surface C2. When there is no need to particularly distinguish between the first main surface A1 and the second main surface A2, they are collectively referred to as main surfaces A, when there is no need to particularly distinguish between the first lateral surface B1 and the second lateral surface B2, they are collectively referred to as lateral surfaces B, and when there is no need to particularly distinguish between the first end surface C1 and the second end surface C2, they are collectively referred to as end surfaces C.

The multilayer body 2 preferably has rounded ridge portions R1 including corner portions. The ridge portions R1 refer to portions where two surfaces of the multilayer body 2 intersect, i.e., the main surface A and the lateral surface B, the main surface A and the end surface C, or the lateral surface B and the end surface C.

### (Multilayer Body 2)

The multilayer body 2 includes an inner layer portion 11 that forms capacitance, outer layer portions 12 that sandwich the inner layer portion 11 in the lamination direction T, and side margin portions 16 that sandwich the inner layer portion 11 and the outer layer portions 12 in the width direction W.

### (Inner Layer Portion 11)

The inner layer portion 11 includes dielectric layers 14 and internal electrode layers 15 laminated along the lamination direction T.

### (Dielectric Layer 14)

Each of the dielectric layers 14 is made of a ceramic material. As the ceramic material, for example, a dielectric ceramic containing BaTiO₃ or SrTiO₃ as a main component can be used. Further, by including a large amount of CaTiO₃ or CaZrO₃ as components of the ceramic material, it is possible to suppress the occurrence of dielectric breakdown in regions between a tip of each of the first internal electrode layers 15a described later and the second external electrode 3b in the length direction L, between a tip of each of the second internal electrode layers 15b described later and the first external electrode 3a in the length direction L, and between the first internal electrode layers 15a and the second internal electrode layers 15b.

### (Internal Electrode Layer 15)

The internal electrode layers 15 include a plurality of first internal electrode layers 15a and a plurality of second internal electrode layers 15b. In the present embodiment, the first internal electrode layers 15a and the second internal electrode layers 15b are alternately provided. Each of the first internal electrode layers 15a includes a first counter portion 152a opposed to a corresponding one of the second internal electrode layers 15b, and a first extension portion 151a extending from the first counter portion 152a toward the first end surface C1. The end portion of the first extension portion 151a is exposed at the first end surface C1 and is electrically connected to the first external electrode 3a described later. Each of the second internal electrode layers 15b includes a second counter portion 152b opposed to a corresponding one of the first internal electrode layers 15a, and a second extension portion 151b extending from the second counter portion 152b toward the second end surface C2. The end portion of the second extension portion 151b is electrically connected to the second external electrode 3b described later. Electric charge is accumulated in the first counter portion 152a of each of the first internal electrode layers 15a and the second counter portion 152b of each of the second internal electrode layers 15b.

Each of the internal electrode layers 15 is preferably made of a metallic material such as Ni, Cu, Ag, Pd, Ag-Pd alloy, or Au, for example. By including Sn in each of the internal electrode layers 15, it is possible to reduce electric field concentration at the interface between the internal electrode layers 15 and the dielectric layers 14, and it is possible to improve high-temperature load reliability. It is still possible to obtain the advantageous effect of improving high-temperature load reliability even when Sn is included in either the first internal electrode layers 15a or the second internal electrode layers 15b.

### (Outer Layer Portion 12)

Each of the outer layer portions 12 can be made of the same material as the dielectric layers 14 of the inner layer portion 11. Each of the outer layer portions 12 can also be made of a DLC film, insulating resin, or the like.

### (Side Margin Portion 16)

The side margin portions 16 sandwich the inner layer portion 11 and the outer layer portions 12 in the width direction W. The side margin portions 16 include a first side margin portion 16a that provides the first lateral surface B1 of the multilayer ceramic capacitor 1 and a second side margin portion 16b that provides the second lateral surface B2 of the multilayer ceramic capacitor 1. The side margin portions 16 can be made of the same material as the dielectric layer 14. When segregation of Si exists at the interface between the side margin portions 16 and the internal electrode layers 15, it is possible to improve the bending strength of the multilayer ceramic capacitor.

### (External Electrode 3)

The external electrodes 3 include a first external electrode 3a provided on the first end surface C1, and a second external electrode 3b provided on the second end surface C2. The external electrodes 3 cover not only the end surface C, but also a portion of each of the main surfaces A and a portion of each of the lateral surfaces B continuous with the end surface C.

As described above, the end of the first extension portion 151a of each of the first internal electrode layers 15a is exposed at the first end surface C1 and electrically connected to the first external electrode 3a. Furthermore, the end of the second extension portion 151b of each of the second internal electrode layers 15b is exposed at the second end surface C2 and electrically connected to the second external electrode 3b.

Each of the external electrodes 3 includes, for example, a base electrode layer 30 and a plated layer 31. However, it is not necessarily required that the external electrodes 3 include such a layered configuration. In addition, each of the external electrodes 3 may include a resin electrode layer in order to reduce stress acting on the multilayer ceramic capacitor 1.

The base electrode layer 30 is formed by, for example, applying and firing an electrically conductive paste containing Cu as a main component. The base electrode layer 30 may include metal components other than Cu, glass components, and/or ceramic materials. Examples of metal components other than Cu include Mg, Cr, Sr, Al, Na, and Fe. Examples of glass components include oxides such as of Ba, Sr, Si, Ca, Zn, Al, or B. The metal components can include, as a main component, components contained in the dielectric layers 14 that provide the inner layer portion 11.

The base electrode layer can include a two-layer configuration. When the base electrode layer includes a two-layer configuration, the first layer may include a metal component and a glass component, and the second layer may include a metal component and a resin. By including a resin in the base electrode layer, it is possible to improve deflection strength. In addition, the second layer does not need to completely cover the first layer, and may cover a portion of the first layer.

The plated layer includes at least one metal selected from Cu, Ni, Sn, Pb, Au, Ag, Pd, Bi, and Zn, or an alloy containing the metal. The ratio of metal per unit volume of the plated layer is preferably 99% by volume or more. The plated layer preferably does not include a glass component.

The plated layer 31 can include a two-layer configuration. The two-layer configuration can include, for example, a Ni plated layer provided on the surface of the base electrode layer 30, and a Sn plated layer provided on the surface of the Ni plated layer. The configuration of the plated layer 31 is not limited to this.

The plated layer 31 can include a three-layer configuration. The three-layer configuration can be formed by, for example, sequentially providing a Sn plated layer, a Ni plated layer, and a Sn plated layer on the surface of the base electrode layer 30, or by sequentially providing a Cu plated layer, a Ni plated layer, and a Sn plated layer on the surface of the base electrode layer 30. The Ni plated layer can prevent the base electrode layer from being eroded by solder, and the Sn plated layer can improve mountability.

### (Spacer 4)

The spacers 4 include a pair of first spacer 4a and second spacer 4b. The first spacer 4a and the second spacer 4b are provided on the second main surface A2 of the capacitor main body 1A, which is a mounting surface to the mounting substrate. Further, the first spacer 4a is provided adjacent to the first end surface C1 located on one side in the length direction L, and the second spacer 4b is provided adjacent to the second end surface C2 located on the other side in the length direction L. When the mounting surface to the mounting substrate is the first lateral surface B1 of the capacitor main body 1A, the first spacer 4a and the second spacer 4b are provided on the first lateral surface B1 of the capacitor main body 1A. Further, the first spacer 4a is provided adjacent to the first end surface C1 located on one side in the length direction L, and the second spacer 4b is provided adjacent to the second end surface C2 located on the other side in the length direction L.

Each of the spacers 4 is provided on a corresponding one of the external electrodes 3 of the capacitor main body 1A and on the surface of the second main surface A2 of the multilayer body 2 where the external electrode 3 is not provided. When the mounting surface to the mounting substrate is the first lateral surface B1 of the capacitor main body 1A, each of the spacers 4 is provided on a corresponding one of the external electrodes 3 of the capacitor main body 1A and on the surface of the first lateral surface B1 of the multilayer body 2 where the external electrode 3 is not provided.

When the mounting surface to the mounting substrate is the second main surface A2 of the capacitor main body 1A, it is preferable that each of the spacers 4 protrudes in the length direction L of the capacitor main body 1A in a plan view in the lamination direction T. That is, the first spacer 4a is provided so as to intersect with a line extending in the lamination direction T from an apex that is a maximum thickness portion in the length direction L of the first external electrode 3a, and the second spacer 4b is provided so as to intersect with a line extending in the lamination direction T from an apex that is a maximum thickness portion in the length direction L of the second external electrode 3b. At this time, it is preferable that each of the spacers 4 does not protrude by 10 µm or more. When the mounting surface to the mounting substrate is the first lateral surface B1 of the capacitor main body 1A, it is preferable that each of the spacers 4 protrudes in the length direction L of the capacitor main body 1A in a plan view in the width direction W. That is, the first spacer 4a is provided so as to intersect with a line extending in the width direction W from an apex that is a maximum thickness portion in the length direction L of the first external electrode 3a, and the second spacer 4b is provided so as to intersect with a line extending in the width direction W from an apex that is a maximum thickness portion in the length direction L of the second external electrode 3b. At this time, it is preferable that each of the spacers 4 does not protrude by 10 µm or more. By providing the first spacer 4a and the second spacer 4b in such a configuration, it is possible to improve the bonding strength between the spacers 4 and the capacitor main body 1A.

In the embodiment, the external electrode 3 includes the base electrode layer 30 and the plated layer 31 that covers the base electrode layer 30, and each of the spacers 4 is provided on the surface of the plated layer 31. However, the plated layer 31 is not necessarily required and, for example, each of the spacers 4 may be provided on the surface of the base electrode layer 30.

Although each of the spacers 4 can contain various components such as metal components and resin components, for example, when each of the spacers 4 contains a large amount of metal components, the ratio of volume to surface area of the metal components increases, so the ESR of the multilayer ceramic electronic component decreases. On the other hand, when each of the spacers 4 contains more resin components than metal powder, the vibration of the multilayer ceramic capacitor can be buffered by the resin components, and the vibration transmitted to the mounting substrate can be reduced.

As the resin component forming each of the spacers 4, for example, resins such as phenol resin and epoxy resin can be used.

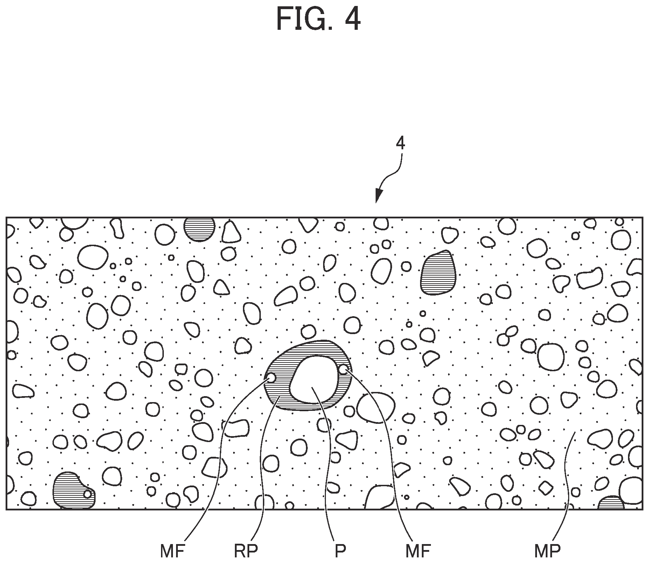

FIG. 4 shows an example of the configuration of the spacer 4 when the spacer 4 is formed using phenol resin or epoxy resin. FIG. 4 is a partially enlarged view of a cross section of the spacer 4.

The spacer 4 shown in FIG. 4 includes either Cu or Ni and Sn as metal powder. Cu and Ni may be coated with Ag. The intermetallic compound formed by adding either Cu or Ni and Sn undergoes little thermal deformation even when soldering is performed when mounting the multilayer ceramic capacitor 1 on a mounting substrate, and can reliably maintain the shape of the spacer 4. In particular, an intermetallic compound formed by adding Sn to an alloy of Cu and Ni is preferable as a component forming the spacer 4.

Phenol resin or epoxy resin is included in the metal region MP made of the metal powder. The phenol resin or epoxy resin coats the intermetallic compound particles and is scattered to fill the gaps between the particles. The phenol resin or epoxy resin may not completely coat the intermetallic compound particles. The phenol resin or epoxy resin may be exposed on the surface of the spacer 4 and cover at least a portion of the surface of the spacer 4. By covering the surface of the spacer 4 with phenol resin, the smoothness of the surface of the spacer 4 is improved, and the mechanical strength of the spacer 4 can be increased. By using phenol resin, the amount of gas generated during the heating treatment when forming the spacer 4 can be reduced, such that the voids P in the spacer 4 can be reduced.

Examples of the phenol resin include novolac-type phenol resins such as phenol novolac resin, phenol aralkyl resin, cresol novolac resin, tert-butylphenol novolac resin, and nonylphenol novolac resin, resol-type phenol resin, and polyoxystyrenes such as polyparaoxystyrene. The spacer 4 may include epoxy resin and rosin in addition to phenol resin.

As shown in FIG. 4, the resin region RP formed by phenol resin or epoxy resin may include metal powder MF. The shrinkage of the phenol resin or epoxy resin is inhibited by the metal powder MF, and the shrinkage stress caused by the phenol resin or epoxy resin can be reduced.

As shown in FIG. 2, the two spacers, the first spacer 4a and the second spacer 4b, each include two regions in the length direction L: the inner region 41 and the outer region 42 other than the inner region 41. The inner regions 41 are opposed to each other. The inner region 41 and the outer region 42 have different Sn content ratios. The inner region 41 and the outer region 42 are defined by inner and outer regions when a line V perpendicular to the second main surface A2, which is the mounting surface, is drawn from the tip Pt of the base electrode layer 30.

By adjusting the Sn content ratios in the inner region 41 and the outer region 42, it is possible to adjust the amount of solder that wets up along the surface of the spacer 4 when heated during mounting, and it is possible to suppress the occurrence of acoustic noise caused by solder wet rise.

It is preferable that the outer region 42 has a lower Sn content ratio compared to the inner region 41. By lowering the Sn content ratio in the outer region 42, it is possible to reduce the amount of solder that wets up along the outer region 42 during heating at the time of mounting. This makes it possible to suppress the occurrence of acoustic noise caused by solder wet rise.

### (Measurement of Sn Content Ratio)

The Sn content ratio can be determined by EDX measurement of the spacer 4 using an FE-SEM (model SU8230) available from Hitachi High-Tech Corporation. Quantitative analysis is performed at an acceleration voltage of 15 kV over a field of view in which the entire spacer 4 is visible, and the Sn content ratio can be calculated using the formula: Sn (tin)/[(metal components other than Sn (tin)) + (C (carbon))] × 100%.

The Sn content ratio in the outer region 42 is preferably 60% or more and 80% or less. When the Sn content ratio is less than 60%, it is not possible to obtain sufficient bonding strength between the spacer 4 and the external electrode 3. On the other hand, when the Sn content ratio exceeds 80%, it is not possible to maintain the shape of the spacer 4 due to heat during solder reflow at the time of mounting.

When the Sn content in the outer region 42 is 60% or more and 80% or less, it is possible to moderately suppress solder wet rise during mounting while enabling reliable mounting of the multilayer ceramic capacitor 1.

### (Method of Manufacturing Multilayer Ceramic Capacitor 1)

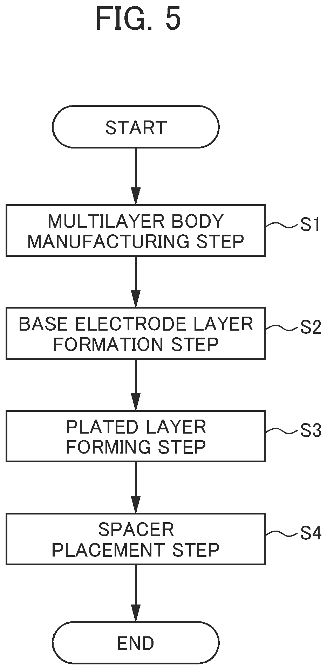

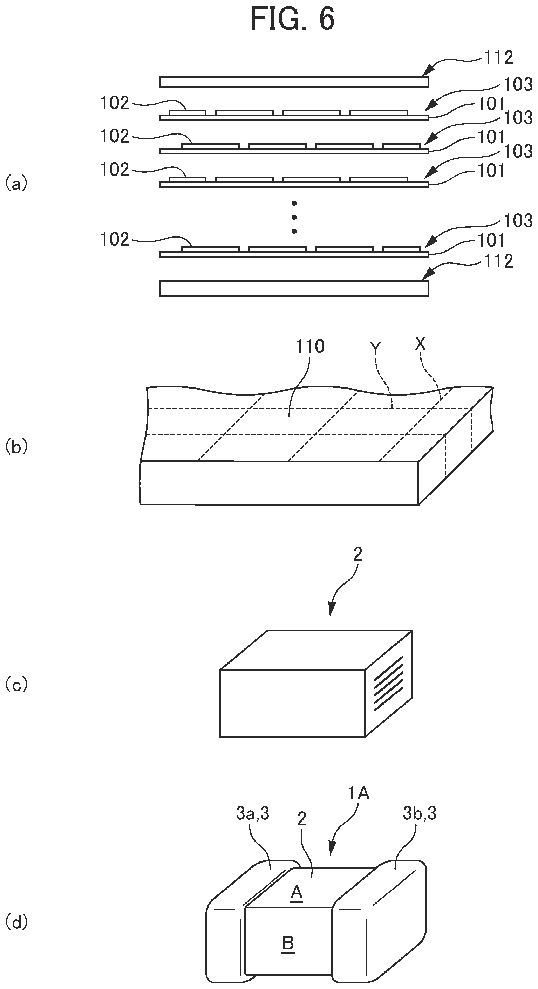

FIG. 5 is a flowchart explaining a method of manufacturing the multilayer ceramic capacitor 1. The method of manufacturing the multilayer ceramic capacitor 1 includes a multilayer body manufacturing step S1, a base electrode layer formation step S2, a plated layer formation step S3, and a spacer placement step S4. FIG. 6 is a diagram explaining the multilayer body manufacturing step S1, the base electrode layer formation step S2, and the plated layer formation step S3.

### (Multilayer Body Manufacturing Step S1)

A ceramic slurry containing ceramic powder, binder, and solvent is formed into a sheet on the surface of a carrier film using a die coater, gravure coater, micro gravure coater, etc., to create a multilayer ceramic green sheet 101 that functions as the dielectric layer 14. Next, an electrically conductive paste is printed in a strip pattern on the multilayer ceramic green sheet 101 by screen printing, inkjet printing, gravure printing, etc., and an electrically conductive pattern 102 that functions as the internal electrode layer 15 is printed on the surface of the multilayer ceramic green sheet 101 to create a material sheet 103.

Next, as shown in FIG. 6(a), a plurality of material sheets 103 are stacked such that the electrically conductive patterns 102 face in the same direction and the electrically conductive patterns 102 are offset from each other by, for example, half a pitch in the length direction between adjacent material sheets 103. Furthermore, ceramic green sheets 112 for manufacturing outer layer portions, which function as the outer layer portions 12, are stacked on both sides of the plurality of stacked material sheets 103.

The plurality of stacked material sheets 103 and the ceramic green sheets 112 for manufacturing outer layer portions are pressed together using a hydrostatic press or the like to create a mother block 110 as shown in FIG. 6(b).

Next, the mother block 110 is cut along cutting lines X and cutting lines Y that intersect the cutting lines X as shown in FIG. 6(b), and fired to manufacture a plurality of multilayer bodies 2 as shown in FIG. 6(c).

### (Base Electrode Layer Formation Step S2)

Next, a base electrode layer 30 is formed by applying and firing an electrically conductive paste containing Cu to the end surfaces C of the multilayer body 2. The base electrode layer 30 extends not only on the end surfaces C on both sides of the multilayer body 2, but also to the main surfaces A and lateral surfaces B, so as to cover a portion of the main surfaces A adjacent to the end surfaces C. However, the present invention is not limited thereto, and the base electrode layer 30 may contain other metals or other components, and two base electrode layers may be provided.

### (Plated Layer Formation Step S3)

Next, a plated layer 31 is formed on the surface of the base electrode layer 30 to manufacture the capacitor main body 1A shown in FIG. 6(d). The plated layer 31 can include a Ni plated layer and a Sn plated layer provided on the surface of the Ni plated layer, but the present invention is not limited thereto.

### (Spacer Placement Step S4)

Next, the inner region 41 and the outer region 42 are formed as follows.

An inner region paste used for forming the inner region 41 is prepared. Examples of the inner region paste include the following phenol resin-based paste and epoxy resin-based paste.

An outer region paste used for forming the outer region 42 is prepared. Examples of the outer region paste include a paste in which the content of Sn included in the outer region is made smaller than the content of Sn included in the inner region.

### (Phenol Resin System)

The inner region paste and the outer region paste each include a metal including Cu, Ni, Sn, and Ag, phenol resin, solvent, and additives.

Examples of the phenol resin include novolac-type phenol resins such as phenol novolac resin, phenol aralkyl resin, cresol novolac resin, tert-butylphenol novolac resin, and nonylphenol novolac resin, resol-type phenol resin, and polyoxystyrenes such as polyparaoxystyrene.

The inner region paste and the outer region paste are applied to one side adjacent to the first end surface C1 in the length direction L where the first spacer 4a is provided and to the other side adjacent to the second end surface C2 in the length direction L where the second spacer 4b is provided, on the second main surface A2, which is the mounting surface of the capacitor main body 1A. When the mounting surface of the capacitor main body 1A is the first lateral surface B1, the inner region paste and the outer region paste are applied to one side adjacent to the first end surface C1 in the length direction L where the first spacer 4a is provided and to the other side adjacent to the second end surface C2 in the length direction L where the second spacer 4b is provided, on the first lateral surface B1, which is the mounting surface of the capacitor main body 1A . For application of the inner region paste and the outer region paste, screen printing or dispensing methods can be used.

After applying the inner region paste and the outer region paste, a heating step is performed. When at least a portion of the metal in the paste forms an intermetallic compound and the metal region MP is formed, a portion of the phenol resin is incorporated into the metal region MP, and a portion thereof is discharged from the metal region MP while solidifying or curing, thereby forming the inner region 41 of the spacer 4 bonded to the capacitor main body 1A.

### (Epoxy Resin System)

The inner region paste and the outer region paste include Cu covered with Sn and Ag, or a metal made of Cu and Ni covered with silver Ag instead of Cu, an epoxy resin, and a solvent.

The epoxy resin is a bisphenol A type epoxy resin. The solvent is, for example, diethylene glycol monobutyl ether, diethylene glycol monoethyl ether, or diethylene glycol monomethyl ether. Curing agents such as phenol resin or imidazole are not included.

The forming step of the epoxy resin system can adopt the same process as the phenol resin system described above.

Additionally, the present invention is not limited to this, and it is possible to first apply the paste for manufacturing the outer region to perform heating treatment, and then apply the paste for manufacturing the inner region to perform heating treatment.

Although embodiments of the present invention have been described above, the present invention is not limited to these embodiments, and it is possible to implement the invention in various configurations.

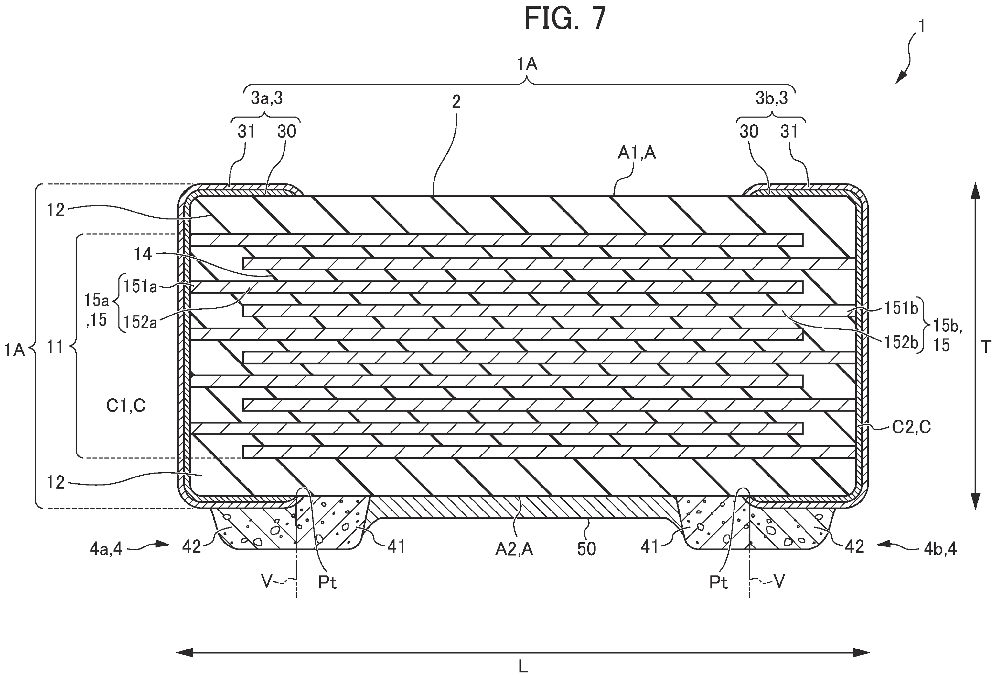

For example, as shown in FIG. 7, between the first spacer 4a and the second spacer 4b, an insulating material 50 may be provided to cover at least a portion of at least one of the first spacer 4a or the second spacer 4b, and at least a portion of the second main surface A2 or the first lateral surface B1 of the multilayer body 2. Additionally, the insulating material may be provided to enter into the gap between the inner region and the second main surface A2 or the first lateral surface B1 of the multilayer body 2. By providing the insulating material 50, it is possible to improve the bonding strength between the spacer 4 and the external electrode 3, and between the spacer 4 and the multilayer body 2.

FIG. 7 shows an embodiment in which the insulating material 50 is provided continuously between the inner region 41 of the first spacer 4a and the inner region 41 of the second spacer 4b. In such an embodiment, the insulating material 50 may have a shape in which the length in the width direction W at the middle portion in the length direction L is shorter than the lengths in the width direction W at both end portions in the length direction L.

The insulating material 50 may be provided continuously between the first spacer 4a and the second spacer 4b, but it is not necessary to provide the insulating material 50 continuously. For example, the insulating material 50 may be provided separately as one that covers a portion of the first spacer 4a and a portion of the second main surface A2 or the first lateral surface B1 of the multilayer body 2, and another that covers a portion of the second spacer 4b and a portion of the second main surface A2 or the first lateral surface B1 of the multilayer body 2.

The insulating material 50 may be made of an insulating resin. The surface of the insulating resin may be covered with an insulating water-repellent treatment agent. By forming the insulating material with an insulating resin, deflection strength is improved, and by further covering with an insulating water-repellent treatment agent, moisture resistance is improved. The insulating resin may contain ceramics, glass, and the like. The insulating material may be made only of the water-repellent treatment agent.

As the material of the insulating material 50, an epoxy resin can be used as a main component, and a phenol resin can be combined as a curing agent. As other curing agents, acid anhydride-based, amine-based, and ester-based curing agents can be used. A curing accelerator may be further added to the epoxy resin. In addition, the insulating material 50 may include, for example, carbon, Co, Al, Cu, N, or Cr. Since it is possible to make the hue of the insulating material 50 different from the hue of the capacitor main body 1A, it is possible to facilitate direction selection when mounting on a substrate.

The insulating material 50 is preferably provided to enter into the interior of the inner region 41, such that the bonding strength between the spacer 4 and the multilayer body 2 and the external electrode 3 can be improved.

The insulating material 50 may cover the outer surface of the multilayer body 2 and the outer surface of the external electrode 3. At this time, the surface of the mounting surface of the spacer 4 is not completely covered by the insulating material. By covering the outer surface of the multilayer body 2 and the external electrode 3 with the insulating material 50, it is possible to reduce the possibility of contact between adjacent electronic components.

The present invention can be implemented in various modes without departing from the gist thereof. The present invention includes the following combinations.

<1> A multilayer ceramic electronic component includes: a multilayer body including an inner layer portion including a plurality of dielectric layers and a plurality of internal electrode layers that are laminated, the multilayer body including two main surfaces opposed to each other in a lamination direction, two end surfaces opposed to each other in a length direction intersecting the lamination direction, and two lateral surfaces opposed to each other in a width direction intersecting the lamination direction and the length direction; two external electrodes each provided on a corresponding one of the two end surfaces, each connected to the plurality of internal electrode layers, and each covering a corresponding one of the two end surfaces and a portion of each of the two main surfaces or each of the two lateral surfaces that continues from the corresponding one of the two end surfaces and functions as a mounting surface to a mounting substrate; and two spacers each connected to a corresponding one of the two external electrodes on the mounting surface. Each of the two external electrodes includes a base electrode layer and a plated layer. Each of the two spacers includes two regions including an inner region and an outer region other than the inner region, the inner region of one of the two spacers and the inner region of one other of the two spacers being opposed to each other in the length direction. When a line perpendicular to the mounting surface is drawn from a tip of the base electrode layer covering a portion of the mounting surface, the inner region is located closer to an inner side in the length direction than the line perpendicular to the mounting surface, and the inner region and the outer region have different Sn content ratios.
<2> In the multilayer ceramic electronic component as described in <1> above, the two end surfaces include a first end surface and a second end surface, the two external electrodes include a first external electrode provided on the first end surface and a second external electrode provided on the second end surface, the two spacers include a first spacer provided on the first external electrode and a second spacer provided on the second external electrode, and when viewed from a direction perpendicular to the mounting surface, the first spacer protrudes from the first external electrode.
<3> In the multilayer ceramic electronic component as described in <2> above, the second spacer protrudes from the second external electrode.
<4> In the multilayer ceramic electronic component as described in <1> above, the two end surfaces include a first end surface and a second end surface, the two external electrodes include a first external electrode provided on the first end surface and a second external electrode provided on the second end surface, the two spacers include a first spacer provided on the first external electrode and a second spacer provided on the second external electrode, and the first spacer intersects with a line perpendicular to the mounting surface drawn from an apex of a maximum thickness portion where a dimension of the first external electrode in the length direction is greatest.
<5> In the multilayer ceramic electronic component as described in <4> above, the second spacer intersects with a line perpendicular to the mounting surface drawn from an apex of a maximum thickness portion where a dimension of the second external electrode in the length direction is greatest.
<6> In the multilayer ceramic electronic component as described in any one of <1> to <5>, the outer region has a lower Sn content ratio than the inner region.
<7> In the multilayer ceramic electronic component as described in any one of <1> to <6> above, the Sn content ratio of the outer region is 60% or more and 80% or less.
<8> In the multilayer ceramic electronic component as described in any one of <1> to <7> above, the two spacers each include a metal component and a resin component.
<9> In the multilayer ceramic electronic component as described in <8> above, the resin component is a phenol resin.
<10> In the multilayer ceramic electronic component as described in any one of <1> to <9> above, the two end surfaces include the first end surface and the second end surface, the two external electrodes include the first external electrode provided on the first end surface and the second external electrode provided on the second end surface, the two spacers include the first spacer provided on the first external electrode and the second spacer provided on the second external electrode, an insulating material is provided between the first spacer and the second spacer, and the insulating material is connected to the multilayer body and the inner region of the first spacer, and to the multilayer body and the inner region of the second spacer.
<11> In the multilayer ceramic electronic component as described in <10> above, the insulating material is provided to enter into an interior of the inner region.

### EXPLANATION OF REFERENCE NUMERALS

A main surface
A1 first main surface
A2 second main surface
B lateral surface
C end surface
MF metal powder
MP metal region
P void
RP resin region
1 multilayer ceramic capacitor (multilayer ceramic electronic component)
1A capacitor main body
2 multilayer body
3 external electrode
3a first external electrode
3b second external electrode
4 spacer
4a first spacer
4b second spacer
11 inner layer portion
12 outer layer portion
14 dielectric layer
15 internal electrode layer
16 side margin portion
30 base electrode layer
31 plated layer
41 inner region
42 outer region
50 insulating material

## Claims

1. A multilayer ceramic electronic component comprising:
a multilayer body including an inner layer portion including a plurality of dielectric layers and a plurality of internal electrode layers that are laminated, the multilayer body including two main surfaces opposed to each other in a lamination direction, two end surfaces opposed to each other in a length direction intersecting the lamination direction, and two lateral surfaces opposed to each other in a width direction intersecting the lamination direction and the length direction;
two external electrodes each provided on a corresponding one of the two end surfaces, each connected to the plurality of internal electrode layers, and each covering a corresponding one of the two end surfaces and a portion of each of the two main surfaces or each of the two lateral surfaces that continues from the corresponding one of the two end surfaces and functions as a mounting surface to a mounting substrate; and
two spacers each connected to a corresponding one of the two external electrodes on the mounting surface, wherein
each of the two external electrodes includes a base electrode layer and a plated layer,
each of the two spacers includes two regions including an inner region and an outer region other than the inner region, the inner region of one of the two spacers and the inner region of one other of the two spacers being opposed to each other in the length direction,
when a line perpendicular to the mounting surface is drawn from a tip of the base electrode layer covering a portion of the mounting surface,
the inner region is located closer to an inner side in the length direction than the line perpendicular to the mounting surface, and
the inner region and the outer region have different Sn content ratios.

2. The multilayer ceramic electronic component according to claim 1, wherein
the two end surfaces include a first end surface and a second end surface,
the two external electrodes include a first external electrode provided on the first end surface and a second external electrode provided on the second end surface,
the two spacers include a first spacer provided on the first external electrode and a second spacer provided on the second external electrode, and
when viewed from a direction perpendicular to the mounting surface, the first spacer protrudes from the first external electrode.

3. The multilayer ceramic electronic component according to claim 2, wherein the second spacer protrudes from the second external electrode.

4. The multilayer ceramic electronic component according to claim 1, wherein
the two end surfaces include a first end surface and a second end surface,
the two external electrodes include a first external electrode provided on the first end surface and a second external electrode provided on the second end surface,
the two spacers include a first spacer provided on the first external electrode and a second spacer provided on the second external electrode, and
the first spacer intersects with a line perpendicular to the mounting surface drawn from an apex of a maximum thickness portion where a dimension of the first external electrode in the length direction is greatest.

5. The multilayer ceramic electronic component according to claim 4, wherein the second spacer intersects with a line perpendicular to the mounting surface drawn from an apex of a maximum thickness portion where a dimension of the second external electrode in the length direction is greatest.

6. The multilayer ceramic electronic component according to any one of claims 1 to 5, wherein the outer region has a lower Sn content ratio than the inner region.

7. The multilayer ceramic electronic component according to any one of claims 1 to 6, wherein the Sn content ratio of the outer region is 60% or more and 80% or less.

8. The multilayer ceramic electronic component according to any one of claims 1 to 7, wherein the two spacers each include a metal component and a resin component.

9. The multilayer ceramic electronic component according to claim 8, wherein the resin component is a phenol resin.

10. The multilayer ceramic electronic component according to any one of claims 1 to 9, wherein
the two end surfaces include the first end surface and the second end surface,
the two external electrodes include the first external electrode provided on the first end surface and the second external electrode provided on the second end surface,
the two spacers include the first spacer provided on the first external electrode and the second spacer provided on the second external electrode,
an insulating material is provided between the first spacer and the second spacer, and
the insulating material is connected to the multilayer body and the inner region of the first spacer, and to the multilayer body and the inner region of the second spacer.

11. The multilayer ceramic electronic component according to claim 10, wherein the insulating material is provided to enter into an interior of the inner region.
